# EUROPÄISCHE PATENTANMELDUNG

(11) **EP 0 544 228 A1**
(43) Veröffentlichungstag der Anmeldung: **02.06.1993**
(21) Anmeldenummer: 92119984.0
(22) Anmeldetag: 24.11.1992
(51) Int. Cl.: B01J 39/02, B01J 39/14, C05D 9/00, C05F 7/00

(54) **Verfahren zur Gewinnung von landwirtschaftlich verwertbarem Klärschlamm**

(30) Priorität: 25.11.1991 DE 4138670
(71) Anmelder: SÜD-CHEMIE AG, D-80333 München (DE)
(72) Erfinder: Huber, Anton, Dipl.-Ing., W-8050 Freising (DE)
(74) Vertreter: Reitzner, Bruno, Dr.

(57) **Zusammenfassung**

Beschrieben wird ein Verfahren zur Gewinnung von
(a) landwirtschaftlich verwertbarem Klärschlamm und/oder
(b) landwirtschaftlich verwertbaren Ammoniumsalzen
aus mit Schadstoffen belastetem Abwasser, wobei aus dem Abwasser in einer Vorreinigungsstufe ein Teil des Klärschlamms abgetrennt wird, der mit Schadstoffen belastet ist, und das vorgereinigte Abwasser zwecks Abtrennung von weiteren schadstoffarmem Klärschlamm weiterbehandelt wird; das Verfahren ist dadurch gekennzeichnet, daß man das vorgereinigte Abwasser mit einem zur Bindung von Ammoniumionen befähigten anorganischen Kationenaustauscher behandelt, wobei der mit Ammoniumionen beladene anorganische Kationenaustauscher
(a) entweder im Klärschlamm verbleibt und/oder
(b) zur Gewinnung von Ammoniumsalzen regeneriert wird.

## Beschreibung

Die Erfindung betrifft ein Verfahren zur Gewinnung von
(a) landwirtschaftlich verwertbarem Klärschlamm und/oder
(b) landwirtschaftlich verwertbaren Ammoniumsalzen.

Aus der DE-A-2 161 131 ist ein Verfahren zur Reinigung von Abwasser bekannt, nach welchem das Abwasser mit einem Fällmittel behandelt und der erhaltene Niederschlag vom Wasser abgetrennt wird. Das so vorbehandelte Wasser wird zunächst mit einem organischen Kationenaustauscher und dann mit einem alkalischen Anionenaustauscher oder einem Ionenaustauscher, der zu einem Chelat umgesetzt ist, behandelt. Es wird der gesamte Niederschlag vom Wasser abgetrennt, da er bei der anschließenden Behandlung mit den Ionenaustauschern stören würde. Eine vollständige Abtrennung des Niederschlages ist möglich, da das Abwasser offenbar keine Schadstoffe enthält, die in den Niederschlag gehen könnten. Anderenfalls wäre die angestrebte Verwendung des abgetrennten Niederschlages als Futter oder Futterzusatz nicht möglich. Ein Hinweis auf die Verarbeitung von mit Schadstoffen belastetem Abwasser findet sich nicht. Die verwendeten organischen Kationenaustauscher sollen hoch- und niedermolekulare Stickstoffverbindungen entfernen. d.h. sie sind in erster Linie Adsorbentien. Eine Bindung von Ammoniumionen ist nicht beabsichtigt.

Aus der WO 85/04390 ist ein Verfahren zur Entfernung von Schwebstoffen, biogenen Nährstoffen und gelösten Metallverbindungen aus Abwasser bekannt, wonach das verunreinigte Abwasser mit einem Mittel in Berührung gebracht wird, das Salze von ein- oder mehrwertigen Metallen in Mengen von bis zu 50 Mol-% und Gesteinskörner in Mengen von mindestens 50 Mol-% enthält, wobei die Gesteinskörner mindestens 25 Mol-% Zeolith enthalten. Nach diesem Verfahren werden die Schwermetallionen nicht vollständig entfernt, sondern zusammen mit Ammoniumionen an dem Zeolith gebunden. Eine Trennung der Ammoniumionen von den Schwermetallionen ist also nicht beabsichtigt.

Aus der WO 91/04948 ist ein Verfahren zur Verbesserung der Selektivität von Zeolithen gegenüber Ammoniumionen in Abwasser bekannt, wobei der Zeolith einer thermischen Behandlung unterzogen wird. Es finden sich keine Hinweise über die Entfernung von Schadstoffen aus dem Klärschlamm.

Aus der EP-A-0 114 038 ist ein Verfahren zur Entfernung und Wiedergewinnung von Ammonium- und/oder Kalium- und/oder Phosphationen aus Abwasser bekannt, wobei das Abwasser über Ionenaustauscherharze geleitet und die mit den genannten Ionen beladenen Ionenaustauscher mit einer Natriumchloridlösung regeneriert werden. Dem Eluat wird ein Magnesiumsalz zugesetzt, um MgNH₄PO₄ und/oder MgKPO₄ auszufällen, die als Düngemittel verwendet werden. über eine chemische Vorklärung des Abwassers zur Entfernung von Schadstoffen finden sich keine Hinweise.

Aus der DE-A-3 115 937 ist ein Verfahren zur Herstellung von praktisch reinen Lösungen von Alkali- oder Ammoniumsulfat oder von Schwefelsäure aus Lösungen von Sulfaten und/oder Hydrogensulfaten und/oder Schwefelsäure bekannt, wobei ein Teil der Kationen durch Zusatz alkalischer Alkali- oder Ammoniumverbindungen als schwerlösliche Hydroxide, Oxide oder Carbonate ausgefällt werden. Die verbleibende Lösung wird entweder eingedampft oder mit einem stark sauren Kationenaustauscher behandelt, wobei Schwefelsäure gewonnen wird. Bei den Abwässern handelt es sich in erster Linie um verdünnte Beizsäuren oder Dünnsäure aus der Titandioxidherstellung, d.h. Abwässer ohne organische Frachten.

Aus der DE-A-2 521 338 ist ein Verfahren zur Entfernung von Ammoniumionen aus wäßrigen Lösungen, z.B. städtischen Abwässern, bekannt, wobei die Abwässer mit einem Zeolithen vom Typ Phillipsit-Gismondit behandelt werden. Es finden sich keine Hinweise auf eine chemische Vorreinigung des Abwassers zur Bindung von Schwermetallionen.

Aus der HU-T028-165-A (Ref. 84-13493/03 aus Chemical Patents Index, Derwent Publications Ltd.) ist die Entfernung von Ammoniak aus Trinkwasser mit Hilfe von Zeolith-Kationenaustauschern bekannt, wobei diese dann mit einer Natriumsalzlösung regeneriert werden. Über die Behandlung von schlammhaltigem Abwasser finden sich keine Hinweise.

Aus der JP-53-94447 (Ref. 67966A/38 aus Chemical Patents Index, Derwent Publications Ltd.) ist die Behandlung von Ammoniumionen enthaltenden Abwässern, z.B. städtischen Abwässern, Fabriksabwässern usw. bekannt, wobei in einer ersten Stufe Ammoniak entfernt wird und in den folgenden Stufen eine biologische Nitrifizierung und Denitrifizierung stattfindet. Der Ammoniak wird in Wasser gelöst und dann an einem Kationenaustauscher in der Natriumform ausgetauscht. Über die Behandlung von schlammhaltigen Abwasser finden sich keine Hinweise.

In der noch nicht offengelegten deutschen Patentanmeldung P 41 00 685.2 ist ein Verfahren zum Reinigen von Phosphate und Stickstoffverbindungen enthaltenden Abwässern beschrieben. In der ersten Stufe dieses Verfahrens werden die Abwässer in einem Vorklärbecken durch Zugabe einer Lösung von Salzen mehrwertiger Metalle zunächst chemisch vorgeklärt, wobei der anfallende Klärschlamm nur dann landwirtschaftlich genutzt werden kann, wenn sein Schadstoffgehalt verhältnismäßig niedrig ist. Als Schadstoffe kommen in erster Linie Schwermetalle, Phenole und Chlorkohlenwasserstoffe in Betracht. Ist die Belastung mit Schadstoffen zu hoch, so muß der Klärschlamm (gegebenenfalls nach dem Ausfaulen in einem Faulturm) deponiert oder verbrannt werden.

Nach dem Verfahren von P 41 00 685.2 schließt sich an die Vorreinigungsstufe eine biologische Reinigung in einem Belebungsbecken an, in welchem neben einer Nitrifikation des im Abwasser enthaltenen Ammoniumstickstoffs eine biologische Phosphatfreisetzung stattfindet. Das nitrathaltige Abwasser wird anschließend denitrifiziert, und die denitrifizierte Schlamm-Abwasser-Mischung wird zur Nitrifikation und zum Abbau der organischen Fracht in das Belebungsbecken zurückgeleitet. Der nach dieser Behandlung erhaltene Klärschlamm ist schadstoffarm und kann nach seiner Abtrennung und üblichen Weiterbehandlung landwirtschaftlich genutzt werden.

Bei dem Verfahren von P 41 00 685.2 wird der im Abwasser enthaltene Ammoniumstickstoff nicht genutzt, sondern geht über die Nitrifizierung und die anschließende Denitrifizierung als elementarer Stickstoff verloren.

Der Erfindung lag deshalb die Aufgabe zugrunde, den im Abwasser enthaltenen Ammoniumstickstoff entweder (a) in Verbindung mit schadstoffarmem Klärschlamm oder (b) in Form von Ammoniumsalzen landwirtschaftlich zu nutzen.

Gegenstand der Erfindung ist somit ein Verfahren zur Gewinnung von (a) landwirtschaftlich verwertbarem Klärschlamm und/oder (b) landwirtschaftlich verwertbaren Ammoniumsalzen aus mit Schadstoffen belastetem Abwasser, wobei (wie bei dem Verfahren nach P 41 00 685.2) aus dem Abwasser in einer Vorreinigungsstufe ein Teil des Klärschlamms abgetrennt wird, der mit Schadstoffen belastet ist, und das vorgereinigte Abwasser zwecks Abtrennung von weiterem schadstoffarmem Klärschlamm weiterbehandelt wird; dieses Verfahren ist dadurch gekennzeichnet, daß man das vorgereinigte Abwasser mit einem zur Bindung von Ammoniumionen befähigten anorganischen Kationenaustauscher behandelt, wobei der mit Ammoniumionen beladene anorganische Kationenaustauscher (a) entweder im Klärschlamm verbleibt und/oder (b) zur Gewinnung von Ammoniumsalzen regeneriert wird.

Wie bei dem Verfahren von P 41 00 685.2 kann das Abwasser in der Vorreinigungsstufe mit organischen und/oder anorganischen Kationenaustauschern und/oder mit einer Lösung von Salzen mehrwertiger Metalle und/oder mit Adsorptionsmittel behandelt werden, wobei die daran gebundenen Schadstoffe zusammen mit dem ersten Teil des Klärschlamms abgetrennt werden.

In der Vorreinigungsstufe verwendet man vorzugsweise eine Lösung von Al-, Fe(II)- oder -(III)-, Ca- und/oder Mg-Salzen, insbesondere von Chloriden, die gegebenenfalls auch kolloidale Kieselsäure enthält. Die kolloidale Kieselsäure bewirkt eine adsorptive Bindung von Schadstoffen, wie Schwermetallen, Phenolen und Chlorkohlenwasserstoffen. Die Klärwirkung sowie die Entfernung von Schwermetallen, Phenolen, Chlorkohlenwasserstoffen und anderen Schadstoffen in der Vorreinigungsstufe kann noch dadurch verbessert werden, daß man vor der Zugabe der Lösung der Salze der mehrwertigen Metalle anorganische oder organische Ionenaustauscher, die zum Kationenaustausch befähigt sind, zusetzt. Darunter fallen insbesondere Aluminiumsilikate, wie natürliche und alkalisch aktivierte Bentonite, deren Hauptmineral der Montmorillonit ist. Weitere geeignete Aluminiumsilikate, die wie der Montmorillonit zum Strukturtyp der Dreischichtminerale gehören, sind z.B. Pyrophyllit, Beidellit, Vermiculit, Illit, Hectorit und Glauconit. Die genannten Aluminiumsilikate sind insbesondere in der Lage, Schwermetallionen, daneben auch andere Schadstoffe, zu binden. Aluminiumsilikate, die auch Ammoniumionen binden, werden auf dieser Stufe nicht bevorzugt, da sie dem Gehalt an Ammoniumionen im vorgereinigten Abwasser herabsetzen.

Organische Ionenaustauscher sind z.B. Polyacrylamide und Polyacrylnitrile. Hochmolekulare Polyampholyte mit funktionellen Amidoxim- und Hydroxamgruppen bzw. sauren, basischen, hydrophilen und hydrophoben Gruppen (z.B. die unter den Handelsnamen GoPur 2000 und 3000 von der Firma HeGo Biotec GmbH vertriebenen Produkte) sind ebenfalls geeignet. Auch in diesem Fall werden Ionenaustauscher mit einem niedrigen Bindevermögen für Ammoniumionen bevorzugt.

Als Alternative zu bzw. zusammen mit den anorganischen oder organischen Ionenaustauschern können, insbesondere zur Entfernung von Phenolen und Chlorkohlenwasserstoffen Adsorptionsmittel oder Adsorptionsmittelgemische verwendet werden, z.B. ein Adsorptionsmittelgemisch, das säureaktivierte Tonminerale, Braunkohlestaub, Aluminium- und/ oder Eisen-(III)-Salze, CaCO₃ und Ca(OH)₂ enthält.

Der in der Vorreinigungsstufe anfallende Klärschlamm wird in an sich bekannter Weise abgetrennt und wegen seines hohen Schadstoffgehalts in an sich bekannter Weise durch Verbrennen oder Deponieren entsorgt. Der Klärschlamm kann vorher in einem Faulturm unter Bildung von Biogas ausgefault werden.

Der Anteil des in der Vorreinigungsstufe entfernten Klärschlamms beträgt üblicherweise etwa 10 bis 80, vorzugsweise etwa 15 bis 60, insbesondere etwa 20 bis 50 Gew.-% des gesamten Schlammes. Dieser Anteil hängt einerseits von der Schadstoffkonzentration im Abwasser und andererseits von der Menge und Wirksamkeit der zugesetzten mehrwertigen Salze, Ionenaustauscher und Adsorptionsmittel ab. Durch eine laufende Analyse der Schadstoffe kann der Anteil des entfernten Klärschlamms auf einfache Weise variiert werden.

Nach der Abtrennung des mit Schadstoffen belasteten Klärschlamms wird das vorgereinigte Wasser vorzugsweise mit einem zur Bindung von Ammoniumionen befähigten anorganischen Kationenaustauscher auf der Basis von Aluminiumsilikaten in der Alkali- oder Wasserstoff-Form in Berührung gebracht. Geeignet sind hierfür z.B. Zeolithe der Formel

Me₂O * Al₂O₃ * xSiO₂ * yH₂O

worin, Me Wasserstoff oder ein Alkalimetall, insbesondere Natrium, X = 1,8 bis 12 und Y 0 bis 8 bedeuten. Ein bevorzugter Zeolith ist der Klinoptilolith. Weitere bevorzugte Zeolithe sind Heulandit, Chabasit und Mordenit.

Der zur Bindung von Ammoniumionen befähigte Kationenaustauscher wird vorzugsweise in einer Menge von 50 bis 1000, insbesondere von 100 bis 300 g je m³ vorgereinigtes Abwasser eingesetzt. Die Einsatzmenge hängt vom Gehalt an Ammoniumionen im vorgereinigten Abwasser ab. Im allgemeinen wird der Kationenaustauscher in einem geringen Überschuß (etwa 10 bis 20 %) über die maximale Bindungskapazität für Ammoniumionen eingesetzt, damit der Ammoniumstickstoff möglichst vollständig aus dem Abwasser entfernt wird.

Die Entfernung des Ammoniumstickstoffs kann nach zwei Varianten erfolgen. Nach der ersten Variante setzt man den zur Bindung von Ammoniumionen befähigten Kationenaustauscher vor oder nach dem Belebungsbecken zu und scheidet den Klärschlamm zusammen mit dem mit Ammoniumionen beladenen Kationenaustauscher durch Zusatz einer Lösung von Salzen mehrwertiger Metalle ab. Hierfür können die vorstehend im Zusammenhang mit der Abscheidung des mit Schadstoffen belasteten Klärschlammanteils angegebenen Salze verwendet werden. Bei dieser Ausführungsform ist der Ammoniumstickstoff fest an den Kationenaustauscher gebunden, d.h. er wird beim Ausbringen des Klärschlamms nur langsam an den Boden abgegeben. Er erfüllt damit die erwünschte Funktion eines Langzeit-Stickstoffdüngers.

Bei der zweiten Ausführungsform wird der Klärschlamm nach dem Belebungsbecken durch Zusatz einer Lösung von Salzen mehrwertiger Metalle abgeschieden, und das weitgehend klärschlammfreie Abwasser wird durch ein Bett des zur Bindung von Ammoniumionen befähigten Kationenaustauschers geleitet. Bei dieser Alternative ist der Klärschlamm zwar ebenfalls schadstoffarm und kann aus diesem Grund landwirtschaftlich genutzt werden; er enthält aber weniger Ammoniumstickstoff als der nach der ersten Alternative erhaltene Klärschlamm. Bei der zweiten Alternative wird der mit Ammoniumionen beladene Kationenaustauscher abgetrennt und regeneriert. Dies kann beispielsweise mit verdünnter Schwefelsäure oder mit Kochsalzlösung geschehen, wobei das erhaltene Amoniumsulfat bzw. Ammoniumchlorid gegebenenfalls in fester Form gewonnen wird. Diese Ammoniumsalze können aber auch dem schadstoffarmen Klärschlamm zugesetzt werden, wobei eine konstante Konzentration an Ammoniumionen eingestellt werden kann.

Es ist ferner möglich, die Alternativen (a) und (b) miteinander zu kombinieren, insbesondere wenn das vorgereinigte Abwasser einen hohen Gehalt an Ammoniumstickstoff hat. In diesem Fall wird nur ein Teil des Ammoniumstickstoffs an den Kationenaustauscher gebunden und in den schadstoffarmen Klärschlamm übergeführt. Der Rest des Ammoniumstickstoffs wird aus dem weitgehend klärschlammfreien Abwasser am Kationenaustauscher gebunden und kann nach der Regenerierung des Austauschers in Form von reinen Ammoniumsalzen gewonnen werden, die getrennt landwirtschaftlich genutzt werden.

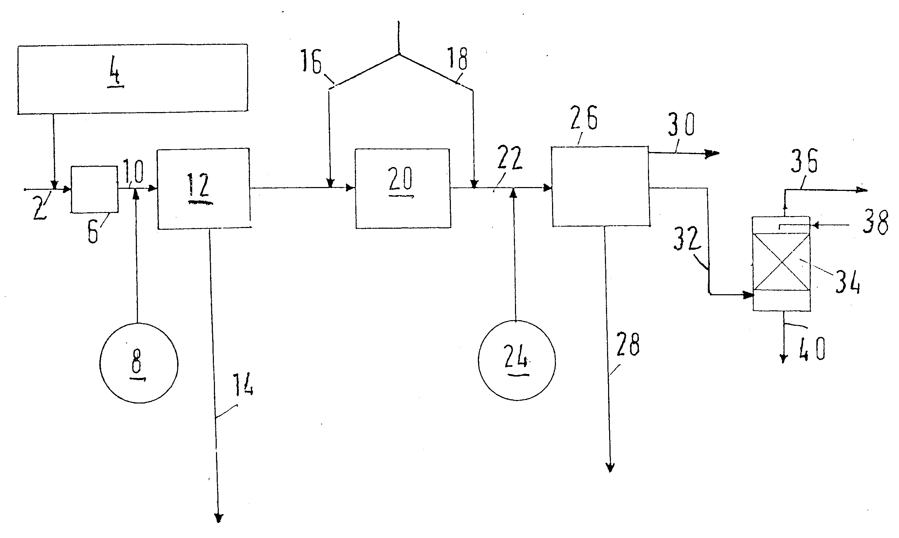

Die Erfindung ist nachstehend anhand der Zeichnung erläutert.

Das mit Schadstoffen belastete Abwasser tritt durch die Leitung 2 in einer Menge von 200 m³/Stunde in das System ein. Das Abwasser enthielt 2 g/m³ Schwermetalle, 35 g/m³ Phenole und 4 g/m³ Chlorkohlenwasserstoffe. In das Abwasser wird aus dem Behälter 4 eine 5 %ige Suspension von alkalisch aktiviertem Bentonit in einer Menge von 40 l/ Stunde eingespeist. Das Gemisch wird über das Pumpwerk 6 in die Leitung 10 gepumpt, in die aus dem Behälter 8 eine Lösung von Salzem mehrwertiger Metalle mit der nachstehend angegebenen Zusammensetzung in einer Menge von 100 1/Stunde eingespeist wird:

| | |
|---|---|
| 7 g Fe³⁺/l | 3 g Mg²⁺/l |
| 11 g Al³⁺/l | 85 g Cl⁻ /l |
| 3 g Ca²⁺/l | |

Durch die Zugabe dieser Lösung flockt ein Teil des Klärschlamms (40 Gew.-% der Gesamtmenge) im Vorklärbecken 12 aus und wird durch die Leitung 14 in einen Faulturm geführt, in welchem ein anaerober biologischer Abbau unter Bildung von Biogas stattfindet. Der aus dem Faulturm austretende Schlamm enthält 80 % der gesamten Schwermetalle, 90 % der gesamten Phenole und 90 % der gesamten Chlorkohlenwasserstoffe. Nach dem Eindicken und Trocknen wird der Schlamm verbrannt.

Das aus dem Vorklärbecken austretende vorgereinigte Abwasser enthält nur noch einen geringen Anteil an Schadstoffen. In das Abwasser wird entweder über die Leitung 16 oder über die Leitung 18, d.h. entweder vor oder nach dem Belebungsbecken 20, Zeolith (Klinoptilolith in der Na-Form) in einer Menge von 200 g/m³ Abwasser eingespeist. Mit Hilfe dieses Kationenaustauschers werden 85 % des gesamten, im Abwasser enthaltenen Ammoniumstickstoffs gebunden. Das Belebungsbecken 20 kann entweder konventionell oder nach dem Verfahren von P 41 00 685 2 gefahren werden. Nach diesem Verfahren wird das vorgeklärte Abwasser vorzugsweise in einem anaeroben Bereich des ersten Teils eines zweiteiligen Belebungsbeckens zusammen mit belebtem Rücklaufschlamm aus einer Fest-Flüssig-Trenneinrichtung (vorzugsweise aus dem Nachklärbecken 26) einer biologischen Phosphatfreisetzung unterzogen. Eine Nitrifikation des Ammoniumstickstoffs und eine darauffolgende Denitrifikation wird jedoch nicht durchgeführt, da der Ammoniumstickstoff durch den Kationenaustauscher gebunden wird.

In die Austrittsleitung 22, in der ein Gemisch aus vorgereinigtem Abwasser, Belebtschlamm und mit Ammoniumstickstoff beladenem Kationenaustauscher strömt, wird aus dem Behälter 24 eine 15 Gew.-%ige wäßrige Lösung von Salzen mehrwertiger Metalle in einer Menge von 0,5 l/m³ Abwasser eingespeist. Die Salzlösung entspricht der Salzlösung aus dem Behälter 8.

Die Leitung 22 führt in das Nachklärbecken 26, in welchem der schadstofffreie, mit Ammoniumstickstoff angereicherte Klärschlamm abgeschieden wird. Der Ammoniumstickstoff ist fest an den Kationenaustauscher gebunden, d.h. er wirkt als Langzeitdünger. Die Schlammphase wird aus der Leitung 28 abgezogen und ist für die landwirtschaftliche Verwertung bestens geeignet. Die Schlammphase enthält zusätzlich das im Belebungsbecken organisch gebundene Phosphat, wodurch die landwirtschaftliche Verwertbarkeit des Klärschlamms noch weiter verbessert wird.

Die wäßrige Phase aus dem Nachklärbecken 26 kann über die Leitung 30 in den Vorfluter geleitet werden.

Bei der Variante (b) wird durch die Leitungen 16 bzw. 18 keine Kationenaustauscher-Dispersion eingespeist, sondern das weitgehend schlammfreie, aber noch Ammoniumstickstoff enthaltende Abwasser wird über die Leitung 32 in einen Festbettreaktor 34 geleitet, der den Kationenaustauscher (Klinoptilolith in der H-Form) enthält. Pro m³ Abwasser mit einem Ammoniumionengehalt von 50 mg/l werden etwa 50 kg Kationenaustauscher benötigt. Der Kationenaustauscher liegt in Granulatform vor. Das von Ammoniumionen weitgehend befreite Abwasser kann durch die Leitung 36 in den Vorfluter geleitet werden.

Nachdem der Kationenaustauscher im Festbettreaktor 34 mit Ammoniumionen beladen ist, wird er beispielsweise mit verdünnter Schwefelsäure, die durch die Leitung 38 eingeführt wird, regeneriert, so daß er wieder in der H-Form vorliegt. Über die Leitung 40 wird eine Ammoniumsulfat-Lösung eingeführt, die zur Gewinnung von festem Ammoniumsulfat eingedampft werden kann.

Damit der Betrieb der Abwasserreinigungsanlage nicht unterbrochen zu werden braucht, verwendet man üblicherweise zwei Festbettreaktoren 34, wobei der erste an den Abwasserstrom angeschlossen ist, während der zweite regeneriert wird.

## Patentansprüche

1. Verfahren zur Gewinnung von
(a) landwirtschaftlich verwertbarem Klärschlamm und/oder
(b) landwirtschaftlich verwertbaren Ammoniumsalzen
aus mit Schadstoffen belastetem Abwasser, wobei aus dem Abwasser in einer Vorreinigungsstufe ein Teil des Klärschlamms abgetrennt wird, der mit Schadstoffen belastet ist, und das vorgereinigte Abwasser zwecks Abtrennung von weiteren schadstoffarmem Klärschlamm weiterbehandelt wird, dadurch gekennzeichnet, daß man das vorgereinigte Abwasser mit einem zur Bindung von Ammoniumionen befähigten anorganischen Kationenaustauscher behandelt, wobei der mit Ammoniumionen beladene anorganische Kationenaustauscher
(a) entweder im Klärschlamm verbleibt und/oder
(b) zur Gewinnung von Ammoniumsalzen regeneriert wird.

2. Verfahren nach Anspruch 1, dadurch gekennzeichnet, daß man das Abwasser in der Vorreinigungsstufe mit organischen und/oder anorganischen Kationenaustauscher und/oder mit einer Lösung von Salzen mehrwertiger Metalle und/oder mit Adsorptionsmitteln behandelt und die daran gebundenen Schadstoffe zusammen mit dem ersten Teil des Klärschlamms abtrennt.

3. Verfahren nach Anspruch 1 oder 2, dadurch gekennzeichnet, daß der Anteil des in der Vorreinigungsstufe entfernten Klärschlamms etwa 10 bis 80, vorzugsweise etwa 15 bis 60, insbesondere etwa 20 bis 50 Gew.-% beträgt.

4. Verfahren nach einem der Ansprüche 1 bis 3, dadurch gekennzeichnet, daß man als zur Bindung von Ammoniumionen befähigte anorganische Kationenaustauscher Aluminiumsilikate in der Alkali- oder Wasserstofform verwendet.

5. Verfahren nach Anspruch 4, dadurch gekennzeichnet, daß man als Aluminiumsilikate Zeolithe der Formel
Me₂O * Al₂O₃ * xSiO₂ * yH₂O
verwendet, worin Me Wasserstoff oder ein Alkalimetall, insbesondere Natrium, X = 1,8 bis 12 und Y 0 bis 8 bedeuten.

6. Verfahren nach einem der Ansprüche 1 bis 5, dadurch gekennzeichnet, daß man den zur Bindung von Ammoniumionen befähigten Kationenaustauscher in einer Menge von 50 bis 1000, vorzugsweise von 100 bis 300 g je m³ vorgereinigtes Abwasser einsetzt.

7. Verfahren nach einem der Ansprüche 1 bis 6, dadurch gekennzeichnet, daß man den zur Bindung von Ammoniumionen befähigten Kationenaustauscher vor oder nach dem Belebungsbecken zusetzt und den Klärschlamm zusammen mit dem mit Ammoniumionen beladenen Kationenaustauscher durch Zusatz einer Lösung von Salzen mehrwertiger Metalle abscheidet (Variante A).

8. Verfahren nach einem der Ansprüche 1 bis 6, dadurch gekennzeichnet, daß man den Klärschlamm nach dem Belebungsbecken durch Zusatz einer Lösung von Salzen mehrwertiger Metalle abscheidet, das weitgehend klärschlammfreie Abwasser durch ein Bett des zur Bindung von Ammoniumionen befähigten Kationenaustauschers leitet und den mit Ammoniumionen beladenen Kationenaustauscher abtrennt und regeneriert (Variante B).

9. Verfahren nach Anspruch 8, dadurch gekennzeichnet, daß man den mit Ammoniumionen beladenen Kationenaustauscher mit verdünnter Schwefelsäure und/oder mit Kochsalzlösung regeneriert und das erhaltene Ammoniumsulfat bzw. Ammoniumchlorid gegebenenfalls in fester Form gewinnt.
